(19) Europäisches Patentamt
European Patent Office
Office européen des brevets

(11) EP 4 442 768 A1

(12) EUROPEAN PATENT APPLICATION
published in accordance with Art. 153(4) EPC

(43) Date of publication:
**09.10.2024 Bulletin 2024/41**

(21) Application number: **22901210.9**

(22) Date of filing: **28.11.2022**

(51) International Patent Classification (IPC):
***C08L 69/00*** *(2006.01)* ***C08G 64/02*** *(2006.01)*
***C08G 64/04*** *(2006.01)* ***G02B 1/04*** *(2006.01)*

(52) Cooperative Patent Classification (CPC):
**C08G 64/02; C08G 64/04; C08L 69/00; G02B 1/04**

(86) International application number:
**PCT/JP2022/043649**

(87) International publication number:
**WO 2023/100777 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2021 JP 2021194674**

(71) Applicant: **MITSUBISHI GAS CHEMICAL COMPANY, INC.**
**Chiyoda-ku**
**Tokyo 100-8324 (JP)**

(72) Inventors:
- **KATO Noriyuki**
  **Tokyo 100-8324 (JP)**
- **NISHIMORI Katsushi**
  **Tokyo 125-8601 (JP)**
- **MOTEGI Atsushi**
  **Tokyo 125-8601 (JP)**
- **ISHIHARA Kentaro**
  **Tokyo 100-8324 (JP)**
- **FUKUI Kiyoshiro**
  **Tokyo 125-8601 (JP)**

(74) Representative: **Hoffmann Eitle**
**Patent- und Rechtsanwälte PartmbB**
**Arabellastraße 30**
**81925 München (DE)**

# (54) POLYCARBONATE RESIN COMPOSITION AND OPTICAL LENS USING SAME

(57) According to the present invention, it is possible to provide a polycarbonate resin composition which includes a structural unit (A) derived from a monomer represented by general formula (i) and a structural unit (B) derived from a monomer represented by general formula (ii), and in which the structural unit (A) and the structural unit (B) are contained at a mass ratio of structural unit (A):structural unit (B) = 91:9 to 99: 1.

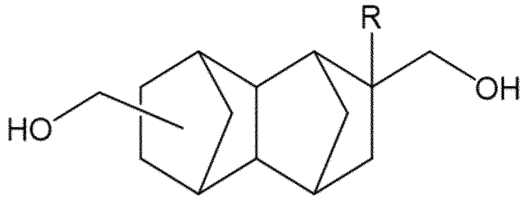

(i)

(In general formula (i), R represents a hydrogen atom or an alkyl group having 1-4 carbon atoms.)

EP 4 442 768 A1

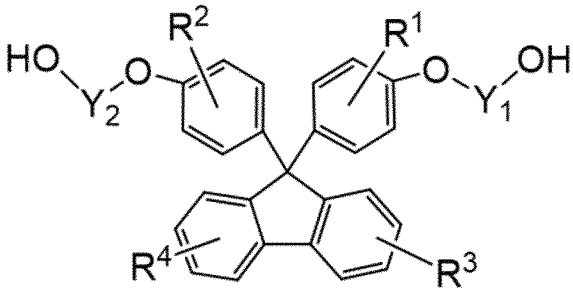

(ii)

(In general formula (ii), $R^1$, $R^2$, $R^3$, and $R^4$ each independently represent a hydrogen atom or the like, and Yi and $Y_2$ each independently represent an alkylene group having 1-4 carbon atoms.)

## Description

### TECHNICAL FIELD

The present invention relates to a novel polycarbonate resin composition and an optical lens formed by using the same.

### BACKGROUND ART

As a material of optical elements to be used in optical systems of various cameras such as cameras, film integrated type cameras and video cameras, an optical glass or an optical transparent resin is used. Optical glasses are excellent in heat resistance, transparency, size stability, chemical resistance, etc., and there are various materials with different refractive indexes (nD) or Abbe numbers (νD). However, optical glasses have problems of high material costs, bad molding processability and low productivity. In particular, significantly advanced techniques and high costs are required for processing for obtaining an aspherical lens to be used for aberration correction, and this is a major obstacle from a practical viewpoint.

Meanwhile, advantageously, optical lenses made of optical transparent resins, particularly thermoplastic transparent resins can be mass-produced by injection molding, and in addition, an aspherical lens can be easily produced therefrom. Such optical lenses are currently used for camera lenses. Examples thereof include a polycarbonate consisting of bisphenol A, polystyrene, poly-4-methylpentene, polymethyl methacrylate and an amorphous polyolefin.

However, when using an optical transparent resin as an optical lens, in addition to the refractive index and Abbe number, transparency, heat resistance and low birefringence are also required, and therefore it has a weak point that portions for use thereof are limited depending on the balance of characteristics of the resin. For example, polystyrene has low heat resistance and high birefringence, poly-4-methylpentene has low heat resistance, polymethyl methacrylate has a low glass transition temperature, low heat resistance and a low refractive index, and therefore use areas of these materials are limited, and a polycarbonate consisting of bisphenol A has weak points such as high birefringence, and therefore portions for use thereof are limited.

Regarding the optical design of optical units, it is known that there is a method in which chromatic aberration is corrected by combined use of a plurality of lenses with different Abbe numbers. For example, chromatic aberration is corrected by combined use of a lens made of a cycloolefin resin having a relatively high Abbe number and a lens made of a polycarbonate resin consisting of bisphenol A having a low Abbe number. However, there is a difference between the hygroscopic expansion coefficient of the cycloolefin resin and the hygroscopic expansion coefficient of the polycarbonate resin, and when forming a lens unit by combining these two types of lenses, the difference between the sizes of the lenses is made at the time of water absorption depending on an operating environment of a smartphone or the like. Due to the difference of the expansion rate, performance of the lens is impaired.

Patent Documents 1 to 3 describe polycarbonate copolymers containing a perhydroxy dimethanonaphthalene skeleton, but since the dihydroxymethyl group is positioned at 2,3-position in each case, the strength is low, and therefore these materials are not suitable for use in optical lenses.

Patent Document 4 discloses a polycarbonate resin obtained by using decahydro-1,4:5,8-dimethanonaphthalene diol (D-NDM) as a raw material, which is for the purpose of providing a resin having a high Abbe number, wherein the difference between the hygroscopic expansion coefficient thereof and that of a polycarbonate resin having a high refractive index and a low Abbe number is small, but it has been desired to further improve optical characteristics. Further, Patent Document 5 discloses a polycarbonate resin composition having a low birefringence index, a medium refractive index and a medium Abbe number, wherein the color phase (YI) and haze (Hz) are not reduced, but it has been desired to further improve optical characteristics.

### PRIOR ART DOCUMENTS

### PATENT DOCUMENTS

Patent Document 1: Japanese Laid-Open Patent Publication No. H05-70584
Patent Document 2: Japanese Laid-Open Patent Publication No. H02-69520
Patent Document 3: Japanese Laid-Open Patent Publication No. H05-341124
Patent Document 4: International Publication WO2016/052370A1 pamphlet
Patent Document 5: International Publication WO2018/181157A1 pamphlet

SUMMARY OF THE INVENTION

PROBLEMS TO BE SOLVED BY THE INVENTION

The problems to be solved by the present invention are to provide a polycarbonate resin composition having a low photoelastic coefficient, a medium refractive index and a medium Abbe number, and an optical lens formed by using the resin composition.

MEANS FOR SOLVING THE PROBLEMS

Conventionally, there is a problem that the transmittance is reduced when a low refractive index material and a high refractive index material are blended. However, the present inventors diligently made researches in order to solve the above-described problems and found that a polycarbonate resin composition having a low photoelastic coefficient, a medium refractive index and a medium Abbe number can be obtained when a structural unit (A) having a specific structure and a structural unit (B) having a specific structure are contained at a specific ratio, and thus the present invention was achieved.

Specifically, the above-described problems can be solved by a polycarbonate resin composition and an optical lens obtained by using the same described below.

<1> A polycarbonate resin composition comprising a structural unit (A) derived from a monomer represented by general formula (i) and a structural unit (B) derived from a monomer represented by general formula (ii),

wherein the structural unit (A) and the structural unit (B) are contained at a mass ratio of structural unit (A): structural unit (B) = 91:9 to 99: 1:

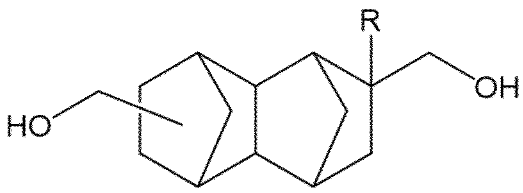

(i)

wherein in general formula (i), R represents a hydrogen atom or an alkyl group having 1 to 4 carbon atoms,

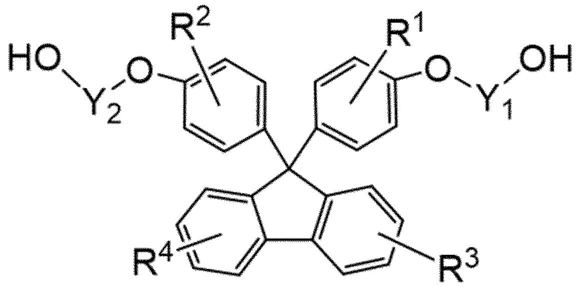

(ii)

wherein in general formula (ii), $R^1$, $R^2$, $R^3$, and $R^4$ each independently represent a hydrogen atom, an alkyl group having 1 to 20 carbon atoms, an alkoxyl group having 1 to 20 carbon atoms, a cycloalkyl group having 5 to 20 carbon atoms, a cycloalkoxyl group having 5 to 20 carbon atoms, an aryl group having 6 to 20 carbon atoms, or an aryloxy group having 6 to 20 carbon atoms, and $Y_1$ and $Y_2$ each independently represent an alkylene group having 1 to 4 carbon atoms.

<2> The polycarbonate resin composition according to item <1>, which comprises a resin mixture of a polycarbonate resin (A) having the structural unit (A) and a polycarbonate resin (B) having the structural unit (B).

<3> The polycarbonate resin composition according to item <1> or <2>, wherein in general formula (ii), $R^1$ and $R^2$ each independently represent a hydrogen atom or a phenyl group, and $R^3$ and $R^4$ represent a hydrogen atom.

<4> The polycarbonate resin composition according to any one of items <1> to <3>, wherein R in general formula (i) represents a hydrogen atom.

<5> The polycarbonate resin composition according to any one of items <1> to <4>, which has a photoelastic coefficient of 11.0 to 12.0 ($\times 10^{-12}m^2/N$).
<6> The polycarbonate resin composition according to any one of items <1> to <5>, which has an Abbe number of 46 to 55.
<7> The polycarbonate resin composition according to any one of items <1> to <6>, which has a refractive index (nD) of 1.533 to 1.547.
<8> The polycarbonate resin composition according to any one of items <1> to <7>, which has Tg of 132 to 135°C.
<9> An optical lens comprising the polycarbonate resin composition according to any one of items <1> to <8>.

ADVANTAGEOUS EFFECT OF THE INVENTION

According to the present invention, it is possible to provide a polycarbonate resin composition having a low photoelastic coefficient, a medium refractive index and a medium Abbe number, and an optical lens obtained by using the same.

EMBODIMENTS FOR CARRYING OUT THE INVENTION

Hereinafter, the mode for carrying out the present invention will be described in detail. However, the present invention is not limited thereto and can be modified variously without departing from the gist of the present invention.
The polycarbonate resin composition of the present invention comprises a structural unit (A) derived from a monomer represented by general formula (i) and a structural unit (B) derived from a monomer represented by general formula (ii), and the structural unit (A) and the structural unit (B) are contained at a mass ratio of structural unit (A): structural unit (B) = 91:9 to 99: 1, preferably structural unit (A): structural unit (B) = 91:9 to 97:3, and more preferably structural unit (A):structural unit (B) = 92:8 to 96:4.

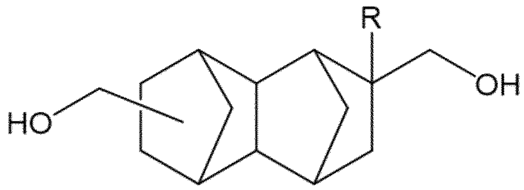

(i)

In general formula (i), R represents a hydrogen atom or an alkyl group having 1 to 4 carbon atoms, preferably represents a hydrogen atom, a methyl group or an ethyl group, and particularly preferably represents a hydrogen atom.

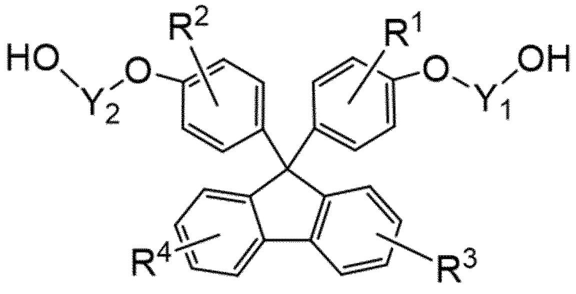

(ii)

In general formula (ii), $R^1$, $R^2$, $R^3$, and $R^4$ each independently represent a hydrogen atom, an alkyl group having 1 to 20 carbon atoms, an alkoxyl group having 1 to 20 carbon atoms, a cycloalkyl group having 5 to 20 carbon atoms, a cycloalkoxyl group having 5 to 20 carbon atoms, an aryl group having 6 to 20 carbon atoms, or an aryloxy group having 6 to 20 carbon atoms. $R^1$ and $R^2$ preferably represent a hydrogen atom, a methyl group or a phenyl group, and more preferably represent a hydrogen atom or a phenyl group. $R^3$ and $R^4$ preferably represent a hydrogen atom.
In general formula (ii), $Y_1$ and $Y_2$ each independently represent an alkylene group having 1 to 4 carbon atoms, preferably represent an ethylene group or a propylene group, and more preferably represent an ethylene group.
In the present invention, a resin mixture of a polycarbonate resin (A) having the structural unit (A) and a polycarbonate resin (B) having the structural unit (B) may be employed as an aspect thereof, or a copolymer resin containing the structural unit (A) and the structural unit (B) in the same resin may be employed as an aspect thereof, as long as the structural unit (A) and the structural unit (B) are contained at a mass ratio of structural unit (A):structural unit

(B) = 91:9 to 99:1, but the resin mixture is more preferred.

Hereinafter, the resin mixture as a more preferred aspect will be described in detail.

<Polycarbonate Resin (A)>

In a preferred aspect of the present invention, the polycarbonate resin (A) has a structural unit (A) represented by general formula (1):

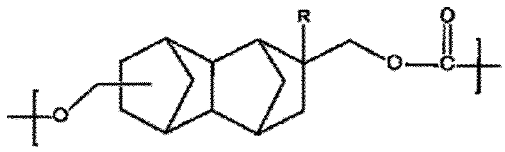

(1)

In general formula (1), R is the same as that in general formula (i).

The structural unit (A) represented by general formula (1) is, for example, a structural unit derived from a dihydroxy compound represented by general formula (i). Examples thereof include a structural unit derived from decahydro-1,4:5,8-dimethanonaphthalene diol (hereinafter sometimes referred to as "D-NDM").

The structural unit (A) is preferably a mixture of an isomer represented by general formula (M) below to which a $-CH_2O-$ group is bound at 6-position (isomer of 2,6-position) and an isomer represented by general formula (N) below to which a $-CH_2O-$group is bound at 7-position (isomer of 2,7-position). From the viewpoint of physical properties of the resin such as strength and tensile elongation of the resin and outer appearance of a molded body, the mass ratio of the isomer of 2,6-position: the isomer of 2,7-position is preferably 1.0:99.0 to 99.0:1.0. It is more preferred that the isomer of 2,6-position: the isomer of 2,7-position is 20:80 to 80:20, and it is particularly preferred that the isomer of 2,6-position: the isomer of 2,7-position is 50:50 to 80:20. In the present invention, preferably, no isomer of 2,3-position is included.

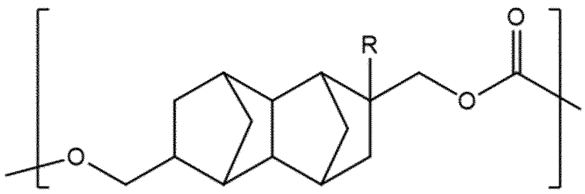

(M)

(In general formula (M), R represents a hydrogen atom or an alkyl group having 1 to 4 carbon atoms.)

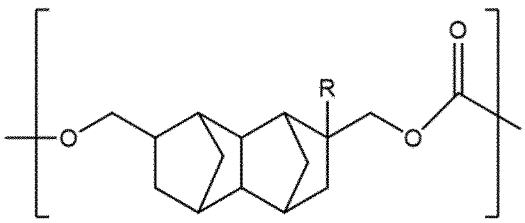

(N)

(In general formula (N), R represents a hydrogen atom or an alkyl group having 1 to 4 carbon atoms.)

Examples of the structural unit represented by general formula (M) include a structural unit derived from a dihydroxy compound represented by general formula (O) below. Examples of the structural unit represented by general formula (N) include a structural unit derived from a dihydroxy compound represented by general formula (P) below.

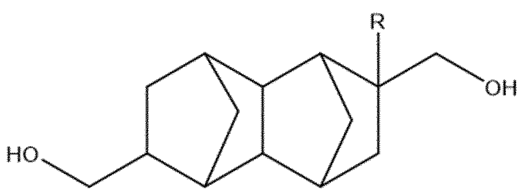

(O)

(In general formula (O), R represents a hydrogen atom or an alkyl group having 1 to 4 carbon atoms.)

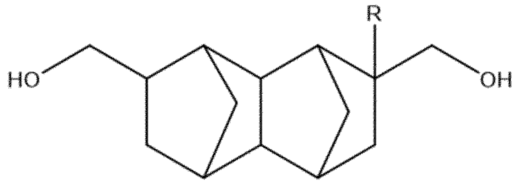

(P)

(In general formula (P), R represents a hydrogen atom or an alkyl group having 1 to 4 carbon atoms.)

In general formulae (i), (M), (N), (O) and (P) above, all Rs are preferably the same, and from the viewpoint of the distributability, R is preferably a hydrogen atom.

The polycarbonate resin (A) of the present invention has the structural unit (A) represented by general formula (1), and may also include another structural unit within a range in which the effects of the present invention are not reduced. The ratio of the structural unit (A) in the polycarbonate resin (A) of the present invention is preferably 70% by mass or more, and more preferably 100% by mass.

The aforementioned another structural unit that may be contained in the polycarbonate resin (A) of the present invention is a structural unit obtained by reacting a diol compound other than that of general formula (i) with a carbonic acid diester. Examples of the diol compound other than that of general formula (i) include bisphenol A, bisphenol AP, bisphenol AF, bisphenol B, bisphenol BP, bisphenol C, bisphenol E, bisphenol F, bisphenol G, bisphenol M, bisphenol S, bisphenol P, bisphenol PH, bisphenol TMC, and bisphenol Z.

<Polycarbonate Resin (B)>

In a preferred aspect of the present invention, the polycarbonate resin (B) has a structural unit (B) represented by general formula (2):

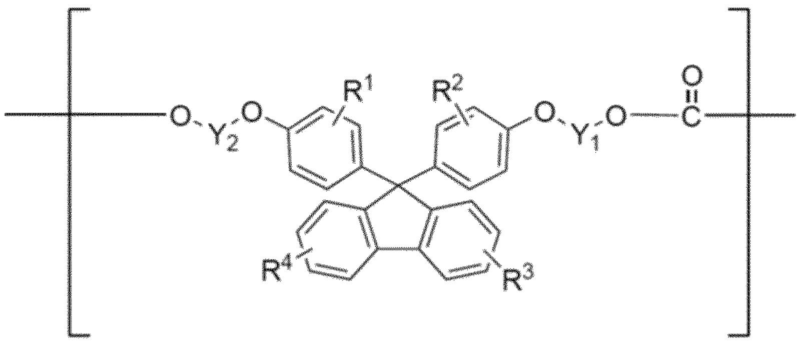

(2)

In general formula (2), $R^1$, $R^2$, $R^3$, $R^4$, $Y_1$ and $Y_2$ are the same as those in general formula (ii).

The structural unit (B) represented by general formula (2) is, for example, a structural unit derived from a dihydroxy compound represented by general formula (ii).

Specific examples of the fluorene-based diol compound represented by general formula (ii) include 9,9-bis(4-hydroxyphenyl)fluorene, 9,9-bis(4-hydroxy-3-methylphenyl)fluorene, 9,9-bis(4-hydroxy-3-tert-butylphenyl)fluorene, 9,9-bis(4-hydroxy-3-isopropylphenyl)fluorene, 9,9-bis(4-hydroxy-3-cyclohexylphenyl)fluorene, 9,9-bis(4-hydroxy-3-phenylphenyl)fluorene, 9,9-bis(4-(2-hydroxyethoxy)phenyl)fluorene, 9,9-bis(4-(2-hydroxyethoxy)-3-methylphenyl)fluorene, 9,9-bis(4-(2-hydroxyethoxy)-3-tert-butylphenyl)fluorene, 9,9-bis(4-(2-hydroxyethoxy)-3-isopropylphenyl)fluorene, 9,9-bis(4-(2-hydroxyethoxy)-3-cyclohexylphenyl)fluorene, and 9,9-bis(4-(2-hydroxyethoxy)-3-phenylphenyl)fluorene. Among them, 9,9-bis(4-(2-hydroxyethoxy)phenyl)fluorene (BPEF), 9,9-bis(4-(2-hydroxyethoxy)-3-phenylphenyl)fluorene (BPPEF) and 9,9-bis(4-(2-hydroxyethoxy)-3-methylphenyl)fluorene (BPMEF) are preferred, and 9,9-bis(4-(2-hydroxyethoxy)phenyl)fluorene (BPEF) and 9,9-bis(4-(2-hydroxyethoxy)-3-phenylphenyl)fluorene (BPPEF) are more preferred.

The polycarbonate resin (B) of the present invention has the structural unit (B) represented by general formula (2), and may also include another structural unit within a range in which the effects of the present invention are not reduced. The ratio of the structural unit (B) represented by general formula (2) in the polycarbonate resin (B) of the present invention is preferably 70% by mass or more, and more preferably 100% by mass.

The aforementioned another structural unit that may be contained in the polycarbonate resin (B) of the present invention is a structural unit obtained by reacting a diol compound other than that of general formula (ii) with a carbonic acid diester. Examples of the diol compound other than that of general formula (ii) include bisphenol A, bisphenol AP, bisphenol AF, bisphenol B, bisphenol BP, bisphenol C, bisphenol E, bisphenol F, bisphenol G, bisphenol M, bisphenol S, bisphenol P, bisphenol PH, bisphenol TMC, and bisphenol Z.

<Polycarbonate Resin Composition>

In a preferred aspect of the present invention, the polycarbonate resin composition comprises a polycarbonate resin (A) having the structural unit (A) represented by general formula (1) and a polycarbonate resin (B) having the structural unit (B) represented by general formula (2).

The polycarbonate resin composition of the present invention may include another resin within a range in which the effects of the present invention are not reduced. The ratio of the sum of the polycarbonate resin (A) and the polycarbonate resin (B) in the polycarbonate resin composition of the present invention is preferably 70% by mass or more, and more preferably 100% by mass.

In the polycarbonate resin composition of the present invention, the mixing ratio (mass ratio) between the polycarbonate resin (A) and the polycarbonate resin (B) is 91:9 to 99: 1, preferably 91:9 to 97:3, and more preferably 92:8 to 96:4.

Further, to the polycarbonate resin composition of the present invention, an antioxidant, a mold release agent, a processing stabilizer, an ultraviolet absorber, a flowability improving agent, a crystal nucleating agent, a toughening agent, a dye, an antistatic agent, an antimicrobial agent or the like is preferably added.

Examples of the antioxidant include a hindered phenol-based antioxidant, a phosphite-based antioxidant, triethylene glycol-bis[3-(3-tert-butyl-5-methyl-4-hydroxyphenyl)propionate], 1,6-hexanediol-bis[3-(3,5-di-tert-butyl-4-hydroxyphenyl)propionate], pentaerythritol-tetrakis[3-(3,5-di-tert-butyl-4-hydroxyphenyl)propionate], octadecyl-3-(3,5-di-tert-butyl-4-hydroxyphenyl)propionate, 1,3,5-trimethyl-2,4,6-tris(3,5-di-tert-butyl-4-hydroxybenzyl)benzene, N,N-hexamethylene bis(3,5-di-tert-butyl-4-hydroxy-hydrocinnamide), 3,5-di-tert-butyl-4-hydroxy-benzylphosphonate-diethyl ester, tris(3,5-di-tert-butyl-4-hydroxybenzyl) isocyanurate, and 3,9-bis{1,1-dimethyl-2-[β-(3-tert-butyl-4-hydroxy-5-methylphenyl)propionyloxy]ethyl}-2,4,8,10-tetraoxaspiro(5,5)undecane. Among them, a hindered phenol-based antioxidant and a phosphite-based antioxidant are more preferred. The content of the antioxidant in the polycarbonate resin composition is preferably 0.001 to 0.3 parts by mass relative to 100 parts by mass of the sum of the polycarbonate resins (A) and (B).

Regarding the mold release agent, it is preferred that 90% by mass or more of it is made of an ester of an alcohol and a fatty acid. Specific examples of the ester of an alcohol and a fatty acid include an ester of a monohydric alcohol and a fatty acid and a partial ester or whole ester of a polyhydric alcohol and a fatty acid. As the above-described ester of a monohydric alcohol and a fatty acid, an ester of a monohydric alcohol having 1 to 20 carbon atoms and a saturated fatty acid having 10 to 30 carbon atoms is preferred. Further, as the partial ester or whole ester of a polyhydric alcohol and a fatty acid, a partial ester or whole ester of a polyhydric alcohol having 1 to 25 carbon atoms and a saturated fatty acid having 10 to 30 carbon atoms is preferred.

Specific examples of the ester of a monohydric alcohol and a saturated fatty acid include stearyl stearate, palmityl palmitate, butyl stearate, methyl laurate, and isopropyl palmitate. Specific examples of the partial ester or whole ester of a polyhydric alcohol and a saturated fatty acid include whole esters or partial esters of monoglyceride stearate, diglyceride stearate, triglyceride stearate, monosorbitate stearate, monoglyceride behenate, monoglyceride caprate, monoglyceride laurate, pentaerythritol monostearate, pentaerythritol tetrastearate, pentaerythritol tetrapelargonate, propylene glycol monostearate, biphenyl biphenate, sorbitan monostearate, 2-ethylhexyl stearate and dipentaerythritols such as dipentaerythritol hexastearate. Among them, monoglyceride stearate and monoglyceride laurate are particularly preferred. The content of these mold release agents is preferably 0.005 to 2.0 parts by mass, more preferably 0.01 to 0.6 parts by mass, and even more preferably 0.02 to 0.5 parts by mass relative to 100 parts by mass of the sum of the polycarbonate resins (A) and (B).

Examples of the processing stabilizer include a phosphorus-based processing heat stabilizer and a sulfur-based processing heat stabilizer. Examples of the phosphorus-based processing heat stabilizer include phosphorous acid, phosphoric acid, phosphonous acid, phosphonic acid, and esters thereof. Specific examples thereof include triphenyl phosphite, tris(nonylphenyl) phosphite, tris(2,4-di-tert-butylphenyl) phosphite, tris(2,6-di-tert-butylphenyl) phosphite, tridecyl phosphite, trioctyl phosphite, trioctadecyl phosphite, didecylmonophenyl phosphite, dioctylmonophenyl phosphite, diisopropylmonophenyl phosphite, monobutyldiphenyl phosphite, monodecyldiphenyl phosphite, monooctyldiphenyl phosphite, bis(2,6-di-tert-butyl-4-methylphenyl) pentaerythritol diphosphite, 2,2-methylenebis(4,6-di-tert-butylphenyl) octylphosphite, bis(nonylphenyl) pentaerythritol diphosphite, bis(2,4-dicumylphenyl) pentaerythritol diphosphite, bis(2,4-di-tert-butylphenyl) pentaerythritol diphosphite, distearylpentaerythritol diphosphite, tributyl phosphate, triethyl phosphate, trimethyl phosphate, triphenyl phosphate, diphenyl monoorthoxenyl phosphate, dibutyl phosphate, dioctyl phosphate, diisopropyl phosphate, dimethyl benzenephosphonate, diethyl benzenephosphonate, dipropyl benzenephosphonate, tetrakis(2,4-di-t-butylphenyl)-4,4'-biphenylene diphosphonate, tetrakis(2,4-di-t-butylphenyl)-4,3'-biphenylene diphosphonate, tetrakis(2,4-di-t-butylphenyl)-3,3'-biphenylene diphosphonate, bis(2,4-di-tert-butylphenyl)-4-phenyl-phenylphosphonate, and bis(2,4-di-tert-butylphenyl)-3-phenyl-phenylphosphonate. Among them, bis(2,6-di-tert-butyl-4-methylphenyl) pentaerythritol diphosphite is more preferred. The content of the phosphorus-based processing heat stabilizer in the polycarbonate resin composition is preferably 0.001 to 0.2 parts by mass relative to 100 parts by mass of the sum of the polycarbonate resins (A) and (B).

Examples of the sulfur-based processing heat stabilizer include pentaerythritol-tetrakis(3-lauryl thiopropionate), pentaerythritol-tetrakis(3-myristyl thiopropionate), pentaerythritol-tetrakis(3-stearyl thiopropionate), dilauryl-3,3'-thiodipropionate, dimyristyl-3,3'-thiodipropionate, and distearyl-3,3'-thiodipropionate. The content of the sulfur-based processing heat stabilizer in the polycarbonate resin composition is preferably 0.001 to 0.2 parts by mass relative to 100 parts by mass of the sum of the polycarbonate resins (A) and (B).

The ultraviolet absorber is preferably at least one ultraviolet absorber selected from the group consisting of a benzotriazole-based ultraviolet absorber, a benzophenone-based ultraviolet absorber, a triazine-based ultraviolet absorber, a cyclic iminoester-based ultraviolet absorber and a cyanoacrylate-based ultraviolet absorber. That is, ultraviolet absorbers mentioned below may be used solely, or two or more of them may be used in combination.

Examples of the benzotriazole-based ultraviolet absorber include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2N-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolephenyl), 2,2'-p-phenylenebis(1,3-benzoxazin-4-one), and 2-[2-hydroxy-3-(3,4,5,6-tetrahydrophthalimidomethyl)-5-methylphenyl]benzotriazole.

Examples of the benzophenone-based ultraviolet absorber include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydrate benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodiumsulfoxybenzophenone, bis(5-benzoyl-4-hydroxy-2-methoxyphenyl)methane, 2-hydroxy-4-n-dodecyloxybenzophonone, and 2-hydroxy-4-methoxy-2'-carboxybenzophenone.

Examples of the triazine-based ultraviolet absorber include 2-(4,6-diphenyl-1,3,5-triazin-2-yl)-5-[(hexyl)oxy]-phenol and 2-(4,6-bis(2,4-dimethylphenyl)-1,3,5-triazin-2-yl)-5-[(octyl)oxy]-phenol.

Examples of the cyclic iminoester-based ultraviolet absorber include 2,2'-bis(3,1-benzoxazin-4-one), 2,2'-p-phenylenebis(3,1-benzoxazin-4-one), 2,2'-m-phenylenebis(3,1-benzoxazin-4-one), 2,2'-(4,4'-diphenylene)bis(3,1-benzoxazin-4-one), 2,2'-(2,6-naphthalene)bis(3,1-benzoxazin-4-one), 2,2'-(1,5-naphthalene)bis(3,1-benzoxazin-4-one), 2,2'-(2-methyl-p-phenylene)bis(3,1-benzoxazin-4-one), 2,2'-(2-nitro-p-phenylene)bis(3,1-benzoxazin-4-one), and 2,2'-(2-chloro-p-phenylene)bis(3,1-benzoxazin-4-one).

Examples of the cyanoacrylate-based ultraviolet absorber include 1,3-bis-[(2'-cyano-3',3'-diphenylacryloyl)oxy]-2,2-bis[(2-cyano-3,3-diphenylacryloyl)oxy]methyl)propane and 1,3-bis-[(2-cyano-3,3-diphenylacryloyl)oxy]benzene.

The content of the ultraviolet absorber is preferably 0.01 to 3.0 parts by mass, more preferably 0.02 to 1.0 parts by mass, and even more preferably 0.05 to 0.8 parts by mass relative to 100 parts by mass of the sum of the polycarbonate resins (A) and (B). When the content is within these ranges, sufficient weatherability can be imparted to the polycarbonate resin composition according to intended use.

In the polycarbonate resin composition, phenol produced at the time of the production and carbonic acid diester which is unreacted and remains are present as impurities. The phenol content in the polycarbonate resin composition is preferably 0.1 to 3000 ppm, more preferably 0.1 to 2000 ppm, and even more preferably 1 to 1000 ppm, 1 to 800 ppm, 1 to 500 ppm or 1 to 300 ppm. Further, the carbonic acid diester content in the polycarbonate resin composition is preferably 0.1 to 1000 ppm, more preferably 0.1 to 500 ppm, and particularly preferably 1 to 100 ppm. By adjusting the amounts of phenol and carbonic acid diester contained in the polycarbonate resin composition, a resin having physical properties appropriate for purposes can be obtained. The adjustment of the phenol content and the carbonic acid diester content can be suitably carried out by changing conditions for polycondensation and apparatuses. The adjustment can also be carried out by changing conditions for the extrusion process after polycondensation.

When the content of phenol or carbonic acid diester is more than the above-described ranges, it may cause problems such as reduction in the strength of a resin molded body obtained and generation of odor. Meanwhile, when the content of phenol or carbonic acid diester is less than the above-described ranges, it may cause reduction in the plasticity of a resin at the time of melting.

<Method for Producing Polycarbonate Resin Composition>

The method for producing the polycarbonate resin composition of the present invention is not particularly limited. For example, it can be produced by any of the following methods: (1) a method in which the polycarbonate resin (A) in a solid state is mixed with the polycarbonate resin (B) in a solid state and the mixture is kneaded by a kneading machine; (2) a method in which the polycarbonate resin (B) in a solid state is added to the polycarbonate resin (A) in a molten state and the mixture is kneaded; (3) a method in which the polycarbonate resin (A) in a solid state is added to the polycarbonate resin (B) in a molten state and the mixture is kneaded; and (4) a method in which the polycarbonate resin (A) in a molten state is mixed with the polycarbonate resin (B) in a molten state and the mixture is kneaded.

Regarding kneading, either a continuous type method or a batch type method may be employed. As the kneading machine, an extruder is suitably used in the case of the continuous type method, and Labo Plastomill or a kneader is suitably used in the case of the batch type method.

The polycarbonate resin (A) of the present invention can be produced by the melt polycondensation method using a dihydroxy compound represented by general formula (i) and a carbonic acid diester as raw materials. In the dihydroxy compound represented by general formula (i), a mixture of an isomer containing a hydroxymethyl group at 2,6-position and an isomer containing a hydroxymethyl group at 2,7-position is present. Regarding these isomers, the mass ratio of the isomer of 2,6-position: the isomer of 2,7-position is 0.1:99.9 to 99.9:0.1. From the viewpoint of physical properties of the resin such as the strength and tensile elongation of the resin and outer appearance of a molded body, the isomer of 2,6-position: the isomer of 2,7-position is preferably 1.0:99.0 to 99.0:1.0, more preferably 20:80 to 80:20, and particularly preferably 50:50 to 80:20. In the present invention, preferably, no isomer of 2,3-position is included. Moreover, use in combination with another diol compound may also be employed. The production can be carried out by this reaction in the presence of, as a polycondensation catalyst, a basic compound catalyst, a transesterification catalyst or a mixed catalyst made of these two catalysts.

Further, the polycarbonate resin (B) of the present invention can be produced by the melt polycondensation method using a dihydroxy compound represented by general formula (ii) and a carbonic acid diester as raw materials.

Examples of the carbonic acid diester include diphenyl carbonate, ditolyl carbonate, bis(chlorophenyl) carbonate, m-cresyl carbonate, dimethyl carbonate, diethyl carbonate, dibutyl carbonate and dicyclohexyl carbonate. Among them, diphenyl carbonate is particularly preferred from the viewpoint of the reactivity and the purity. The carbonic acid diester is used at a ratio of preferably 0.97 to 1.20 mol, and more preferably 0.98 to 1.10 mol relative to 1 mol of the diol component. By adjusting the molar ratio, the molecular weight of the polycarbonate resin is controlled.

Examples of the basic compound catalyst include an alkali metal compound, an alkaline earth metal compound and a nitrogen-containing compound.

Examples of the alkali metal compound include an organic salt, inorganic salt, oxide, hydroxide, hydride or alkoxide of an alkali metal, etc. Specific examples thereof include sodium hydroxide, potassium hydroxide, cesium hydroxide, lithium hydroxide, sodium hydrogen carbonate, sodium carbonate, potassium carbonate, cesium carbonate, lithium carbonate, sodium acetate, potassium acetate, cesium acetate, lithium acetate, sodium stearate, potassium stearate, cesium stearate, lithium stearate, sodium borohydride, sodium phenylboron, sodium benzoate, potassium benzoate, cesium benzoate, lithium benzoate, disodium hydrogen phosphate, dipotassium hydrogen phosphate, dilithium hydrogen phosphate, disodium phenyl phosphate, a disodium salt, dipotassium salt, dicesium salt or dilithium salt of bisphenol A, and a sodium salt, potassium salt, cesium salt or lithium salt of phenol. From the viewpoint of the catalytic effect, price, distribution amount, influence on the color phase of resin, etc., sodium carbonate and sodium hydrogen carbonate are preferred.

Examples of the alkaline earth metal compound include an organic salt, inorganic salt, oxide, hydroxide, hydride or alkoxide of an alkaline earth metal compound, etc. Specific examples thereof include magnesium hydroxide, calcium hydroxide, strontium hydroxide, barium hydroxide, magnesium hydrogen carbonate, calcium hydrogen carbonate, strontium hydrogen carbonate, barium hydrogen carbonate, magnesium carbonate, calcium carbonate, strontium carbonate, barium carbonate, magnesium acetate, calcium acetate, strontium acetate, barium acetate, magnesium stearate, calcium stearate, calcium benzoate and magnesium phenyl phosphate.

Examples of the nitrogen-containing compound include quaternary ammonium hydroxides and salts thereof, and amines. Specific examples thereof include: quaternary ammonium hydroxides having an alkyl group, aryl group or the like such as tetramethylammonium hydroxide, tetraethylammonium hydroxide, tetrapropylammonium hydroxide, tetrabutylammonium hydroxide and trimethylbenzylammonium hydroxide; tertiary amines such as triethylamine, dimethylbenzylamine and triphenylamine; secondary amines such as diethylamine and dibutylamine; primary amines such as propylamine and butylamine; imidazoles such as 2-methylimidazole, 2-phenylimidazole and benzimidazole; and bases or basic salts such as ammonia, tetramethylammonium borohydride, tetrabutylammonium borohydride, tetrabutylammonium tetraphenylborate and tetraphenylammonium tetraphenylborate.

As the transesterification catalyst, salts of zinc, tin, zirconium or lead are preferably used. These substances may be used solely, or two or more of them may be used in combination. Further, these substances may be used in

combination with the above-described alkali metal compound or alkaline earth metal compound.

As the transesterification catalyst, zinc acetate, zinc benzoate, zinc 2-ethylhexanoate, tin(II) chloride, tin(IV) chloride, tin(II) acetate, tin(IV) acetate, dibutyltin dilaurate, dibutyltin oxide, dibutyltin dimethoxide, zirconium acetylacetonato, zirconium oxyacetate, zirconium tetrabutoxide, lead(II) acetate, lead(IV) acetate or the like is specifically used.

These catalysts are used at a ratio of preferably $1\times10^{-9}$ to $1\times10^{-3}$ mol, and more preferably $1\times10^{-7}$ to $1\times10^{-4}$ mol relative to 1 mol of the sum of the diol compounds.

In the melt polycondensation method, using the aforementioned raw materials and catalyst, melt polycondensation is carried out while removing a by-product by means of the transesterification reaction under heating conditions and under ordinary pressure or reduced pressure. The reaction is generally performed with two or more stages.

Specifically, the first-stage reaction is performed at 120 to 260°C, and preferably 180 to 240°C, and for 0.1 to 5 hours, and preferably 0.5 to 3 hours. Subsequently, the pressure reducing degree of the reaction system is increased while increasing the reaction temperature to react the diol compound with the carbonic acid diester, and finally, a polycondensation reaction is performed under a reduced pressure of 1 mmHg or less at 200 to 350°C for 0.05 to 2 hours. The reaction may be either a continuous type or a batch type. The reaction apparatus to be used for performing the reaction may be a vertical apparatus equipped with an anchor type stirring blade, maxblend stirring blade, helicalribbon type stirring blade or the like, or a horizontal apparatus equipped with a paddle blade, lattice blade, spectacle-shaped blade or the like, or an extruder-type apparatus equipped with a screw. Further, in consideration of the viscosity of a polymerized product, use of these reaction apparatuses in suitable combination is preferred.

In the methods for producing the polycarbonate resin (A) and the polycarbonate resin (B) of the present invention, after the polymerization reaction is completed, in order to maintain thermal stability and hydrolytic stability, the catalyst may be removed or deactivated. In general, a method for deactivating a catalyst by means of addition of a publicly-known acidic substance is suitably carried out. As such substances, specifically, esters such as butyl benzoate; aromatic sulfonic acids such as p-toluenesulfonic acid; aromatic sulfonic acid esters such as butyl p-toluenesulfonate and hexyl p-toluenesulfonate; phosphoric acids such as phosphorous acid, phosphoric acid and phosphonic acid; phosphorous acid esters such as triphenyl phosphite, monophenyl phosphite, diphenyl phosphite, diethyl phosphite, di-n-propyl phosphite, di-n-butyl phosphite, di-n-hexyl phosphite, dioctyl phosphite and monooctyl phosphite; phosphoric acid esters such as triphenyl phosphate, diphenyl phosphate, monophenyl phosphate, dibutyl phosphate, dioctyl phosphate and monooctyl phosphate; phosphonic acids such as diphenylphosphonic acid, dioctylphosphonic acid and dibutylphosphonic acid; phosphonic acid esters such as diethyl phenylphosphonate; phosphines such as triphenyl phosphine and bis(diphenylphosphino)ethane; boric acids such as boric acid and phenylboric acid; aromatic sulfonates such as dodecylbenzenesulfonic acid tetrabutylphosphonium salt; organic halides such as stearic acid chloride, benzoyl chloride and p-toluenesulfonic acid chloride; alkyl sulfates such as dimethyl sulfate; organic halides such as benzyl chloride; etc. are preferably used. From the viewpoint of the deactivating effect, color phase of the resin and stability, butyl p-toluenesulfonate is preferably used. These deactivating agents are used in an amount of preferably 0.01 to 50 times, and more preferably 0.3 to 20 times the molar quantity of the catalyst. When the amount is less than 0.01 times the molar quantity of the catalyst, the deactivating effect is insufficient and therefore it is undesirable. When the amount is more than 50 times the molar quantity of the catalyst, heat resistance is reduced and a molded body tends to be easily colored, and therefore it is undesirable.

After the catalyst is deactivated, a process of devolatilizing and removing a low boiling point compound in the polymer under a pressure of 0.1 to 1 mmHg and at a temperature of 200 to 350°C may be carried out. In this process, a horizontal apparatus equipped with a stirring blade having excellent surface renewal ability such as a paddle blade, a lattice blade and a spectacle-shaped blade, or a thin film evaporator is suitably used.

It is desired that the content of foreign materials in the polycarbonate resin composition of the present invention is as small as possible, and filtration of a melting raw material and filtration of a catalyst solution are suitably carried out. The mesh of the filter is preferably 5 μm or less, and more preferably 1 μm or less. Moreover, filtration of the produced resin using a polymer filter is suitably carried out. The mesh of the polymer filter is preferably 100 μm or less, and more preferably 30 μm or less. Further, the process of obtaining a resin pellet should definitely be carried out in a low-dust environment, which is preferably Class 1000 or lower, and more preferably Class 100 or lower.

<Physical Properties of Polycarbonate Resin Composition>

The glass transition temperature (Tg) of the polycarbonate resin composition of the present invention is preferably 132 to 135°C, and more preferably 132 to 133°C.

The polycarbonate resin composition of the present invention has a refractive index, which is measured after molding according to the method of JIS-K-7142, of preferably 1.533 to 1.547, and more preferably 1.535 to 1.542.

The polycarbonate resin composition of the present invention has an Abbe number, which is measured after molding according to the method of JIS-K-7142, of preferably 46 to 55, and more preferably 48 to 53.

The polycarbonate resin composition of the present invention has a photoelastic coefficient, which is measured

with respect to a cast film having a thickness of 0.1 mm obtained by forming, of preferably 11.0 to 12.0 ($\times 10^{-12} m^2/N$), and more preferably 11.0 to 11.5 ($\times 10^{-12} m^2/N$).

The polystyrene equivalent weight-average molecular weight (Mw) of the polycarbonate resin composition of the present invention is preferably 20,000 to 70,000. The polystyrene equivalent weight-average molecular weight (Mw) is more preferably 25,000 to 65,000, and particularly preferably 30,000 to 60,000. When Mw is less than 20,000, an optical lens becomes fragile, and therefore it is undesirable. When Mw is more than 70,000, the melt viscosity increases, resulting in difficulty in taking out a resin after the production, and in addition, the flowability is reduced, resulting in difficulty in injection molding in a molten state, and therefore it is undesirable.

From the viewpoint of yellowing resistance and stability (heat resistance, weather resistance, etc.), the content of decahydro-1,4:5,8-dimethanonaphthalene diol (D-NDM) in a final pellet (polycarbonate resin composition containing additives) is preferably 30 ppm or less, and more preferably 20 ppm or less.

<Optical Lens>

The optical lens of the present invention can be obtained by injection-molding the above-described polycarbonate resin composition of the present invention into a lens shape using an injection molding machine or injection compression molding machine. The molding conditions for injection molding are not particularly limited, but the molding temperature is preferably 180 to 280°C, and the injection pressure is preferably 50 to 1700 $kg/cm^2$.

In order to avoid mixing of a foreign material in the optical lens as much as possible, the molding environment must be a low-dust environment, and it is preferably Class 1000 or lower, and more preferably Class 100 or lower.

The optical lens of the present invention is preferably used in the form of an aspherical lens according to need. In the case of the aspherical lens, since the spherical aberration can be adjusted to be substantially zero by one lens, it is not necessary to remove the spherical aberration by combining a plurality of spherical lenses, and reduction in weight and reduction in the production cost can be carried out. Accordingly, the aspherical lens is particularly useful as a camera lens among optical lenses. The astigmatism of the aspherical lens is preferably 0 to 15 mλ, and more preferably 0 to 10 mλ.

The thickness of the optical lens of the present invention can be set in a wide range depending on intended uses and is not particularly limited, but is preferably 0.01 to 30 mm, and more preferably 0.1 to 15 mm. To the surface of the optical lens of the present invention, a coat layer such as an antireflection layer, a hard coat layer or the like may be provided according to need. The antireflection layer may be either a single layer or a multilayer, and may be made of either an organic substance or an inorganic substance, but is preferably made of an inorganic substance. Specific examples thereof include oxides and fluorides such as silicon oxide, aluminium oxide, zirconium oxide, titanium oxide, cerium oxide, magnesium oxide and magnesium fluoride. Among them, more preferred are silicon oxide and zirconium oxide, and even more preferred is a combination of silicon oxide and zirconium oxide. Regarding the antireflection layer, the combination of single layer(s)/multilayer(s), components thereof, the combination of thicknesses, etc. are not particularly limited, but the antireflection layer preferably has a two-layer structure or three-layer structure, and particularly preferably has a three-layer structure. The thickness of the entire antireflection layer to be formed is preferably 0.00017 to 3.3% of the thickness of the optical lens, specifically, 0.05 to 3 μm, and particularly preferably 1 to 2 μm.

EXAMPLES

Hereinafter, the present invention will be specifically described by way of examples, but the present invention is not limited thereto. Note that measurement values in the Examples were measured using the below-described methods and apparatuses.

1) Refractive index (nD): The refractive index of a cast film having a thickness of 0.1 mm obtained by forming a polycarbonate resin composition obtained was measured according to the method of JIS-K-7142 using an Abbe's refractometer.

2) Abbe number (νd): Refractive indexes of a cast film having a thickness of 0.1 mm obtained by forming a polycarbonate resin composition obtained were measured at 23°C and at wavelengths of 486 nm, 589 nm and 656 nm according to the method of JIS-K-7142 using an Abbe's refractometer, and the Abbe number was calculated using the below-described formula:

$$\nu d=(nD-1)/(nF-nC)$$

nD: refractive index at a wavelength of 589 nm
nC: refractive index at a wavelength of 656 nm

nF: refractive index at a wavelength of 486 nm

3) Glass transition temperature (Tg): The glass transition temperature (Tg) was measured using a differential scanning calorimeter (DSC). The specified conditions are as described below.

Apparatus: DSC7000X manufactured by Hitachi High-Tech Science Corporation
Amount of sample: 5 mg
Atmosphere: under nitrogen gas atmosphere
Temperature raising condition: 10°C/min

4) Photoelastic coefficient: Regarding a cast film having a thickness of 0.1 mm obtained by forming a polycarbonate resin composition obtained, change in birefringence relative to change in load at a wavelength of 633 nm was measured using an ellipsometer and calculated.
Ellipsometer: M-220 manufactured by JASCO Corporation

[Synthesis Example 1]

As raw materials, 20000 g (89.97 mol) of decahydro-1,4:5,8-dimethanonaphthalene diol (D-NDM) represented by a structural formula below, 19425 g (90.68 mol) of diphenyl carbonate (DPC), and 10.8 ml of 0.10 mol/l sodium hydrogen carbonate solution ($1.08\times10^{-3}$ mol, that is, $1.2\times10^{-5}$ mol relative to 1 mol of the total of dihydroxy compounds) were put into a 50L reactor equipped with a stirrer and a distillation apparatus, and the mixture was heated to 215°C over 1 hour under nitrogen atmosphere (760 Torr) and stirred. After that, the pressure reducing degree was adjusted to 150 Torr over 10 minutes, and conditions were kept at 215°C and 150 Torr for 20 minutes to perform a transesterification reaction. Further, the temperature was increased to 240°C at a rate of 37.5°C/hr, and conditions were kept at 240°C and 150 Torr for 10 minutes. After that, the pressure reducing degree was adjusted to 120 Torr over 10 minutes, and conditions were kept at 240°C and 120 Torr for 70 minutes. After that, the pressure reducing degree was adjusted to 100 Torr over 10 minutes, and conditions were kept at 240°C and 100 Torr for 10 minutes. Further, the pressure reducing degree was adjusted to 1 Torr or less over 40 minutes, and stirring was performed under conditions of 240°C and 1 Torr or less for 10 minutes to perform a polymerization reaction. After the reaction was completed, nitrogen was injected into the reactor to increase the pressure, and a polycarbonate resin (D-NDM-PC) produced was taken out therefrom while being pelletized.

D-NDM

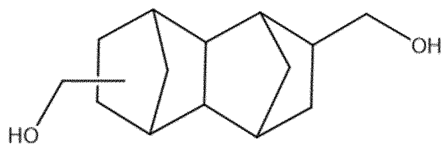

[Synthesis Example 2]

A polycarbonate resin (BPEF-PC) was obtained in a manner similar to that in Synthesis Example 1, except that 39455 g (89.97 mol) of 9,9-bis(4-(2-hydroxyethoxy)phenyl)fluorene (BPEF) represented by a structural formula below was used instead of D-NDM.

BPEF

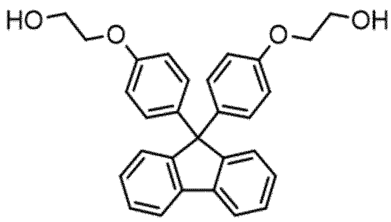

(Example 1)

To a mixture obtained by mixing 2881 g (13.0 mol in terms of D-NDM monomer unit) of the polycarbonate resin (D-NDM-PC) obtained in Synthesis Example 1 with 119 g (0.27 mol in terms of BPEF monomer unit) of the polycarbonate resin (BPEF-PC) obtained in Synthesis Example 2, 3.0 g of a hindered phenol-based antioxidant (AO-60 manufactured by ADEKA Corporation), 0.9 g of a phosphite-based antioxidant (PEP-36 manufactured by ADEKA Corporation), and 7.2 g of glycerin monostearate as a mold release agent (S-100A manufactured by Riken Vitamin Co., Ltd.) were added, and the mixture was kneaded and pelletized using a twin screw extruder (TEM-18SS manufactured by SHIBAURA MACHINE CO., LTD.) at a resin temperature of 260°C and at a screw rotation speed of 200 rpm, thereby obtaining a polycarbonate resin composition. Physical properties of the obtained polycarbonate resin composition are shown in Table 1.

(Example 2, Comparative Examples 1 to 3)

A polycarbonate resin composition was obtained in a manner similar to that in Example 1, except that polycarbonate resins shown in Table 1 (D-NDM-PC and/or BPEF-PC) were used instead of the polycarbonate resins used in Example 1. Physical properties of the obtained polycarbonate resin composition are shown in Table 1.

(Comparative Example 4)

A polycarbonate resin (BPEF-TCDDM-PC) was obtained in a manner similar to that in Synthesis Example 1, except that 585 g (1.33 mol) of BPEF, 5189 g (26.44 mol) of tricyclodecanedimethanol (TCDDM) represented by a structural formula below, 5996 g (27.99 mol) of DPC, and 10.8 ml of 0.10 mol/l sodium hydrogen carbonate solution ($1.08\times10^{-3}$ mol, that is, $1.2\times10^{-5}$ mol relative to 1 mol of the total of dihydroxy compounds) were used as raw materials. A polycarbonate resin composition was obtained in a manner similar to that in Example 1, except that 3000 g of the obtained polycarbonate resin (BPEF-TCDDM-PC) was used instead of the polycarbonate resins used in Example 1. Physical properties of the obtained polycarbonate resin composition are shown in Table 1.

TCDDM

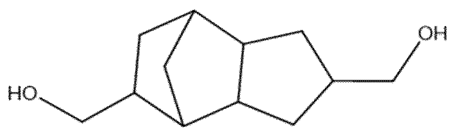

Table 1

| | Structural unit (A) | Structural unit (B) | Structural unit (A) | Structural unit (B) | Another structural unit | Structural unit (A) | Structural unit (B) | Another structural unit | Physical properties | | | |
|---|---|---|---|---|---|---|---|---|---|---|---|---|
| | D-NDM-PC [g] | BPEF-PC [g] | D-NDM [wt%] | BPEF [wt%] | TCDDM [wt%] | D-NDM [mol%] | BPEF [mol%] | TCDDM [mol%] | Refractive index [-] | Abbe number [-] | Photoelastic coefficient [$\times 10^{-12} m^2/N$] | Tg [°C] |
| Comparative Example 1 | 3000 | 0 | 100 | 0 | 0 | 100 | 0 | 0 | 1.532 | 56.7 | 10.6 | 131 |
| Example 1 | 2881 | 119 | 960 | 4.0 | 0 | 97.9 | 2.1 | 0 | 1.536 | 51.4 | 11.0 | 132 |
| Example 2 | 2760 | 240 | 920 | 8.0 | 0 | 95.7 | 4.3 | 0 | 1.540 | 50.2 | 11.5 | 132 |
| Comparative Example 2 | 2640 | 360 | 85.0 | 150 | 0 | 91.6 | 8.4 | 0 | 1.548 | 45.4 | 13.0 | 136 |
| Comparative Example 3 | 0 | 3000 | 0 | 100 | 0 | 0 | 100 | 0 | 1.640 | 23.5 | 32.0 | 145 |
| Comparative Example 4 | - | - | 0 | 10.1 | 89.9 | 0 | 4.8 | 95.2 | 1.540 | 500 | 17.0 | 85 |

INDUSTRIAL APPLICABILITY

The polycarbonate resin composition of the present invention can be suitably used as a lens for cameras of smartphones, DSCs, vehicles, etc. Further, by using the polycarbonate resin composition of the present invention, thickness reduction of lens units to be used for telephoto applications, etc. can be expected.

## Claims

1. A polycarbonate resin composition comprising a structural unit (A) derived from a monomer represented by general formula (i) and a structural unit (B) derived from a monomer represented by general formula (ii),

   wherein the structural unit (A) and the structural unit (B) are contained at a mass ratio of structural unit (A): structural unit (B) = 91:9 to 99: 1:

   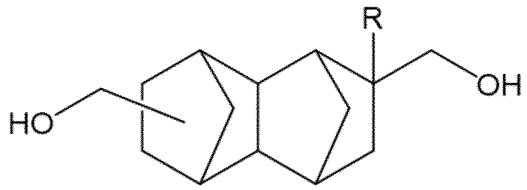

   (i)

   wherein in general formula (i), R represents a hydrogen atom or an alkyl group having 1 to 4 carbon atoms,

   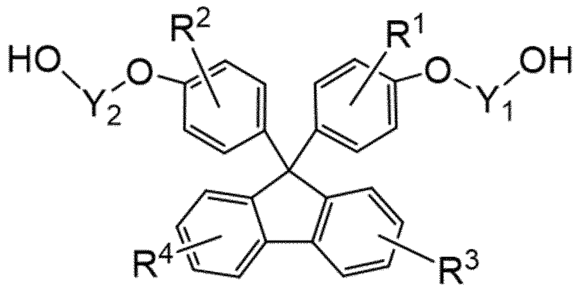

   (ii)

   wherein in general formula (ii), $R^1$, $R^2$, $R^3$, and $R^4$ each independently represent a hydrogen atom, an alkyl group having 1 to 20 carbon atoms, an alkoxyl group having 1 to 20 carbon atoms, a cycloalkyl group having 5 to 20 carbon atoms, a cycloalkoxyl group having 5 to 20 carbon atoms, an aryl group having 6 to 20 carbon atoms, or an aryloxy group having 6 to 20 carbon atoms, and $Y_1$ and $Y_2$ each independently represent an alkylene group having 1 to 4 carbon atoms.

2. The polycarbonate resin composition according to claim 1, which comprises a resin mixture of a polycarbonate resin (A) having the structural unit (A) and a polycarbonate resin (B) having the structural unit (B).

3. The polycarbonate resin composition according to claim 1 or 2, wherein in general formula (ii), $R^1$ and $R^2$ each independently represent a hydrogen atom or a phenyl group, and $R^3$ and $R^4$ represent a hydrogen atom.

4. The polycarbonate resin composition according to any one of claims 1 to 3, wherein R in general formula (i) represents a hydrogen atom.

5. The polycarbonate resin composition according to any one of claims 1 to 4, which has a photoelastic coefficient of 11.0 to 12.0 ($\times 10^{-12} m^2/N$).

6. The polycarbonate resin composition according to any one of claims 1 to 5, which has an Abbe number of 46 to 55.

7. The polycarbonate resin composition according to any one of claims 1 to 6, which has a refractive index (nD) of 1.533 to 1.547.

**8.** The polycarbonate resin composition according to any one of claims 1 to 7, which has Tg of 132 to 135°C.

**9.** An optical lens comprising the polycarbonate resin composition according to any one of claims 1 to 8.

**INTERNATIONAL SEARCH REPORT**

International application No.
**PCT/JP2022/043649**

**A. CLASSIFICATION OF SUBJECT MATTER**

***C08L 69/00***(2006.01)i; ***C08G 64/02***(2006.01)i; ***C08G 64/04***(2006.01)i; ***G02B 1/04***(2006.01)i
FI: C08L69/00; C08G64/02; C08G64/04; G02B1/04

According to International Patent Classification (IPC) or to both national classification and IPC

**B. FIELDS SEARCHED**

Minimum documentation searched (classification system followed by classification symbols)

C08L69/00; C08G64/02; C08G64/04; G02B1/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/080205 A1 (MITSUBISHI GAS CHEMICAL COMPANY, INC.) 23 April 2020 (2020-04-23)<br>claims, paragraphs [0012], [0016], [0019]-[0020], [0044]-[0045], [0048], [0052]-[0069] | 1-9 |
| X | WO 2016/052370 A1 (MITSUBISHI GAS CHEMICAL COMPANY, INC.) 07 April 2016 (2016-04-07)<br>claims, paragraphs [0012], [0017]-[0019], [0066]-[0068], [0072], [0076]-[0106] | 1, 3-9 |
| A | WO 2018/181157 A1 (MITSUBISHI GAS CHEMICAL COMPANY, INC.) 04 October 2018 (2018-10-04)<br>entire text | 1-9 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 January 2023** | **24 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/043649**

| Patent document cited in search report | Publication date (day/month/year) | Patent family member(s) | Publication date (day/month/year) |
|---|---|---|---|
| WO 2020/080205 A1 | 23 April 2020 | CN 112867762 A | |
| WO 2016/052370 A1 | 07 April 2016 | US 2017/0276837 A1<br>claims, paragraphs [0015], [0023]-[0025], [0068]-[0071], [0076], [0080]-[0137]<br>EP 3202815 A1<br>CN 106661216 A | |
| WO 2018/181157 A1 | 04 October 2018 | US 2020/0224025 A1<br>entire text<br>EP 3604440 A1<br>CN 110461942 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP H0570584 A
- JP H0269520 A
- JP H05341124 A
- WO 2016052370 A1
- WO 2018181157 A1